# EUROPEAN PATENT SPECIFICATION

(11) **EP 3 504 047 B1**
(45) Date of publication and mention of the grant of the patent: **09.06.2021**
(21) Application number: 16770845.2
(22) Date of filing: 12.09.2016
(51) Int. Cl.: B29C 64/25, B33Y 30/00

(54) **BAFFLE DOORS FOR ADDITIVE MANUFACTURING SYSTEM**
PRALLTÜREN FÜR SYSTEM ZUR GENERATIVEN FERTIGUNG
PORTES DÉFLECTRICES POUR SYSTÈME DE FABRICATION ADDITIVE

(30) Priority: 23.08.2016 US 201662378505 P
(43) Date of publication of application: 03.07.2019
(73) Proprietor: Stratasys, Inc., Eden Prairie, MN 55344 (US)
(72) Inventor: BOSVELD, Michael, D., Bloomington, MN 55437 (US)
(74) Representative: De Vries & Metman
(86) International application number: PCT/US2016/051297
(87) International publication number: WO 2018/038749

(56) References cited:
- EP-A1- 1 204 517
- US-A1- 2013 078 073
- US-B2- 7 297 304

## Description

### BACKGROUND

The present disclosure relates to additive manufacturing systems for building three-dimensional (3D) parts with layer-based, additive manufacturing techniques. In particular, the present disclosure relates to additive manufacturing systems capable of printing parts from high-temperature materials.

Additive manufacturing, also called 3D printing, is generally a process in which a three-dimensional (3D) object is built by adding material to form a 3D part rather than subtracting material as in traditional machining. One basic operation of an additive manufacturing system consists of slicing a three-dimensional computer model into thin cross sections, translating the result into two-dimensional position data, and feeding the data to control equipment which manufacture a three-dimensional structure in an additive build style. Additive manufacturing entails many different approaches to the method of fabrication, including fused deposition modeling, ink jetting, selective laser sintering, powder/binder jetting, electron-beam melting, electrophotographic imaging, and stereolithographic processes. Using one or more additive manufacturing techniques, a three-dimensional solid object of virtually any shape can be printed from a digital model of the object by an additive manufacturing system, commonly referred to as 3D printer.

In a fused deposition modeling additive manufacturing system, a printed part may be printed from a digital representation of the printed part in an additive build style by extruding a flowable part material along toolpaths. The part material is extruded through an extrusion tip carried by a print head of the system, and is deposited as a sequence of roads onto a substrate. The extruded part material fuses to previously deposited part material, and solidifies upon a drop in temperature. In a typical system where the material is deposited in planar layers, the position of the print head relative to the substrate is incremented along an axis (perpendicular to the build plane) after each layer is formed, and the process is then repeated to form a printed part resembling the digital representation.

In fabricating printed parts by depositing layers of a part material, supporting layers or structures are typically built underneath overhanging portions or in cavities of printed parts under construction, which are not supported by the part material itself. A support structure may be built utilizing the same deposition techniques by which the part material is deposited. A host computer generates additional geometry acting as a support structure for the overhanging or free-space segments of the printed part being formed. Support material is then deposited from a second nozzle pursuant to the generated geometry during the printing process. The support material adheres to the part material during fabrication, and is removable from the completed printed part when the printing process is complete.

The documents US 7 297 304 B1 and EP 1 204 517 A1 both discloses an additive manufacturing system comprising a building chamber, wherein the upper side of the chamber is provided with an expandable/ retractable baffle door system.

### SUMMARY

An aspect of the present disclosure is directed to a build chamber for an additive manufacturing system for printing three-dimensional parts. The build chamber includes four side walls having a rectangular configuration, an opening generally defined by the side walls having first and second opposing edges, and a build platen accessible through the opening. A heating mechanism is configured to heat a region of the build chamber to one or more temperatures. An insulating baffle door is removably attached at the first opposing edge and is configured to extend between a first position adjacent the first opposing edge and a second position adjacent the second opposing edge. The insulating baffle door is configured in another aspect to adjust a span of the opening, including completely covering the opening.

Another aspect of the present disclosure is directed to an additive manufacturing system for printing three-dimensional parts. The additive manufacturing system includes a build chamber having an opening with first and second opposing edges, an insulating baffle door extendable across the opening, and a build platen accessible through the baffle door. A heating mechanism is configured to heat a region of the build chamber to one or more temperatures. The baffle door comprises three baffle sections. A first baffle section is removably attached proximate the first opposing edge and is configured to expand and contract along a first span of the opening. A second baffle section is attached proximate the second opposing edge and is configured to expand and contract along the first span of the opening. A third baffle section is positioned between the first and the second baffle sections and has a frame, a tool port configured to receive a print head or other additive manufacturing tool, and baffles on either side of the tool port. The third baffle section is configured to expand and contract in a direction substantially perpendicular to expansion and contraction of the first and second baffle sections as the tool port moves within the frame, such that a print head received within the tool port may deposit part material through a nozzle end thereof in controlled tool paths onto the build platen to print a 3D part. A printed 3D part is removable from the build chamber through the baffle door.

Another aspect of the present disclosure is directed to a method of providing access to build platen contained within a build chamber of an additive manufacturing system. The method includes providing an insulated baffle door through which a print head is received and the build platen is accessed. The baffle door comprises a first baffle section removably attached proximate the first opposing edge and configured to expand and contract across the opening, a second baffle section attached proximate the second opposing edge and configured to expand and contract across the opening, and a third baffle section positioned between the first baffle section and the second baffle section, the third baffle section having a frame, a tool port, and baffles configured to expand and contract in a direction substantially perpendicular to expansion and contraction of the first and second baffle sections as the tool port moves within the frame. The first baffle section optionally has a second end that is removably attachable to the frame of the second baffle section. The build platen is accessed by opening the baffle door.

### DEFINITIONS

Unless otherwise specified, the following terms as used herein have the meanings provided below:

The terms "about" and "substantially" are used herein with respect to measurable values and ranges due to expected variations known to those skilled in the art (e.g., limitations and variabilities in measurements).

Directional orientations such as "above", "below", "top", "bottom", "horizontal", "vertical", and the like are made with reference to a direction along a printing axis of a 3D part. In the embodiments in which the printing axis is a vertical z-axis, the layer-printing direction is the upward direction along the vertical z-axis. In these embodiments, the terms "above", "below", "top", "bottom", and the like are based on the vertical z-axis. However, in embodiments in which the layers of 3D parts are printed along a different axis, such as along a horizontal x-axis or y-axis, the terms "above", "below", "top", "bottom", and the like are relative to the given axis. Furthermore, in embodiments in which the printed layers are planar, the printing axis is normal to the build plane of the layers.

The term "printing onto", such as for "printing a 3D part onto a print foundation" includes direct and indirect printings onto the print foundation. A "direct printing" involves depositing a flowable material directly onto the print foundation to form a layer that adheres to the print foundation. In comparison, an "indirect printing" involves depositing a flowable material onto intermediate layers that are directly printed onto the receiving surface. As such, printing a 3D part onto a print foundation may include (i) a situation in which the 3D part is directly printed onto to the print foundation, (ii) a situation in which the 3D part is directly printed onto intermediate layer(s) (e.g., of a support structure), where the intermediate layer(s) are directly printed onto the print foundation, and (iii) a combination of situations (i) and (ii).

The term "providing", such as for "providing a chamber" and the like, when recited in the claims, is not intended to require any particular delivery or receipt of the provided item. Rather, the term "providing" is merely used to recite items that will be referred to in subsequent elements of the claim(s), for purposes of clarity and ease of readability.

### BRIEF DESCRIPTION OF THE DRAWINGS

FIG. 1 is a perspective view of a traditional build chamber with a hinged door.
FIG. 2A is a perspective view of a build chamber with a baffle door in an open position according to an embodiment of the present disclosure.
FIG. 2B is a perspective view of the build chamber of FIG. 2A with the baffle door in a closed position according to another embodiment of the present disclosure.
FIGS. 3A and 3B are front elevation views of a section of a baffle door according to an embodiment of the present disclosure.
FIGS. 4A and 4B are front elevation views of another section of a baffle door according to another embodiment of the present disclosure.
FIGS. 5A and 5B are front elevation views of the system shown with an open baffle door as in FIG. 2B.
FIG. 5C is a front elevation view of system shown with a closed baffle door as in FIG. 2A.
FIG. 6 is a block diagram of an additive manufacturing system on which embodiments of the present disclosure may be practiced.

### DETAILED DESCRIPTION

Additive manufacturing systems include those that build parts in a vertical manner, that is, on a substantially horizontal build platform, or a horizontal matter, that is, on a substantially vertical build platform. Additive manufacturing systems typically use hinged doors for access to a heated build chamber often referred to as an oven, to maintain proper temperature conditions for building a three-dimensional part. This is done in order to increase reliability and accuracy of parts built in a layer-by-layer operation. The system also includes one or more print heads and optionally other tools configured to print a 3D part in a layer-by-layer manner onto a print foundation (e.g., a platen or other component having a receiving surface) in the heated chamber or other build region. Additive manufacturing systems may be configured to print 3D parts in a horizontal direction, a vertical direction, or along other orientations (e.g., slopes relative to the horizontal and vertical directions). Further, additive manufacturing systems can include an unheated build chamber or a print environment that is not confined to a build chamber.

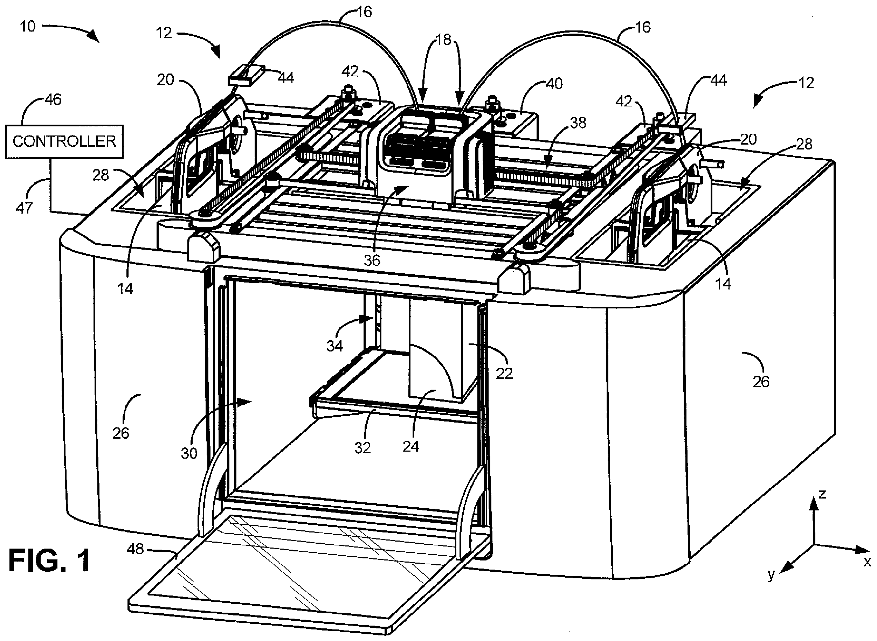

A traditional hinged door printer 10 is shown in FIG. 1. A printing configuration 11 with spool assemblies 12 coupled to print heads 18 such as is known in the art is shown at a top 14 of the printer 10, with details omitted. System 10 is an additive manufacturing system for printing 3D parts or models and corresponding support structures (e.g., 3D part 22 and support structure 24) from part and support material filaments, respectively, of spool assemblies 12, using a layer-based, additive manufacturing technique. Suitable additive manufacturing systems for system 10 include extrusion-based systems developed by Stratasys, Inc., Eden Prairie, MN under the trademark "FDM". As shown, system 10 includes system casing 26, build chamber 30 containing platen 32 and platen gantry 34, and a hinged door 48 used to access the build chamber 30 at a front thereof. A controller 46 is operable to control functions of the system 10.

Build chamber 30 is an enclosed environment that contains platen 32 for printing 3D part 22 and support structure 24. Build chamber 30 may be heated (e.g., with circulating heated air) to reduce the rate at which the part and support materials solidify after being extruded and deposited (e.g., to reduce distortions and curling). In alternative embodiments, build chamber 30 may be omitted and/or replaced with different types of build environments. For example, 3D part 22 and support structure 24 may be built in a build environment that is open to ambient conditions or may be enclosed with alternative structures (e.g., flexible curtains).

As build chamber sizes increase, especially for large format printers, the bulk and size of a door, such as door 48, becomes unwieldy. For installations of large numbers of additive manufacturing systems, such as in an additive manufacturing system farm, the space required for large, heavy doors reduces printer density and therefore cost-effectiveness of the print farm. Further, as heated build chambers often operate at temperatures on the order of 100 °C or higher, any opening of the chamber door 48 necessarily results in heat loss. With larger openings and larger doors, the amount of heat loss increases, along with the time and cost to reheat the chamber to a desired temperature.

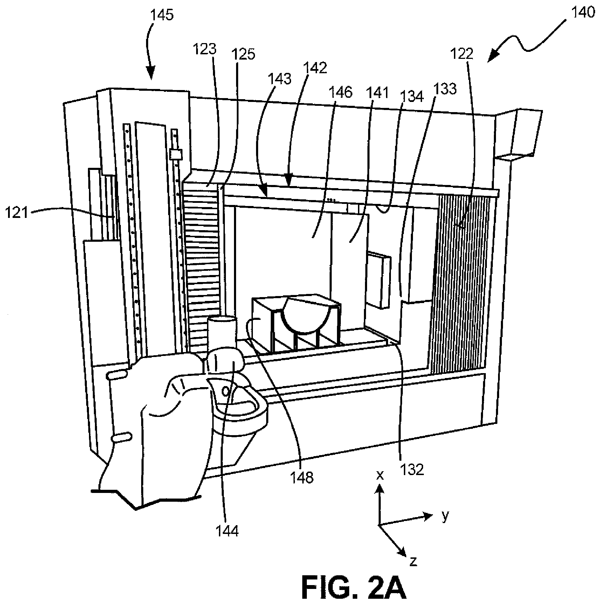

The traditional hinged door oven opening is replaced in one embodiment of a large format printer with a baffle door such as baffle door 120 as described below with respect to FIGS. 2A, 2B, 3A, 3B, 4A, 4B, 5A, 5B, and 5C. The insulated baffle door 120 comprises in one embodiment first and second laterally movable baffle sections 121 and 122 attached to opposing sides of a central baffle frame 125. The central baffle frame 125 includes an interior space configured to retain a vertically movable third baffle section 123 therein. Third baffle section 123 has a substantially rectangular tool port 124 therein to allow access to the build chamber 142 for a print head or print heads 144 or other additive manufacturing tools. Print head or heads 144 are moved on a gantry 145, which may be a robot or robotic arm. The substantially rectangular tool port 124 is movable as follows. The first and second baffle sections 121 and 122 are expandable and contractible laterally, such as with an accordion or pleated baffle. As a print head 144 is moved in the y-direction on the print head gantry 145, the first and second baffle sections 121 and 122 expand and contract respectively with the movement. As the print head 144 is moved in the x-direction on the print head gantry 145, the third baffle section 123 expands and contracts on either side of the opening 143 respectively with the movement. This movement allows the print head 144 to move to any position within the build chamber opening. When access to the build chamber 142 is desired, either or both of the first and second baffle sections 121 and/or 122 are detached from the central baffle frame 125, such that the build chamber 142 is accessible through the build chamber opening, thereby eliminating the hinged door and the space required for the door to hingedly move. Alternatively, the first and second baffle sections 121 and/or 122 are removably attached to either or both side walls.

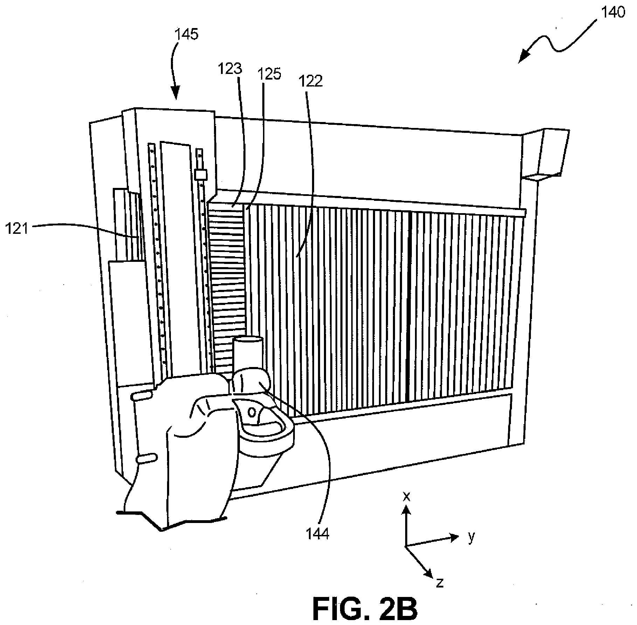

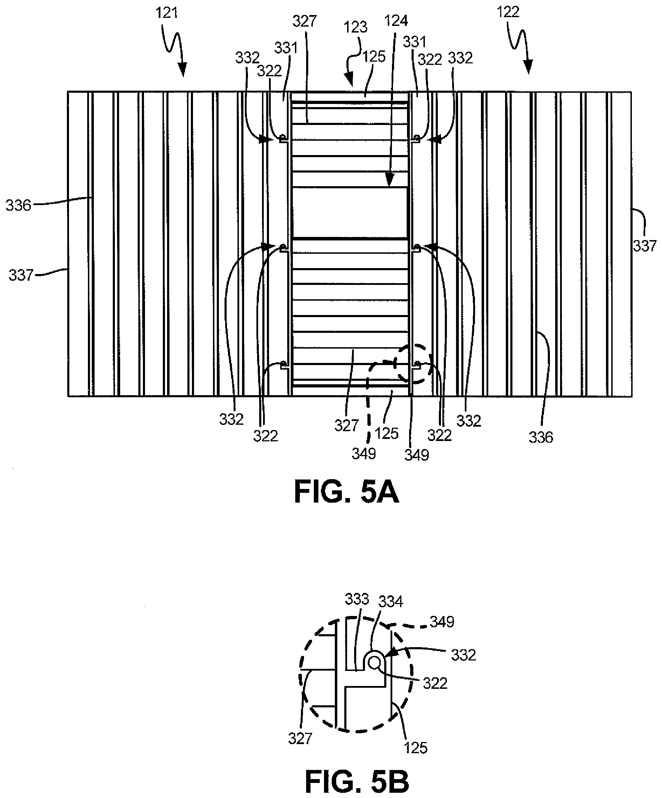

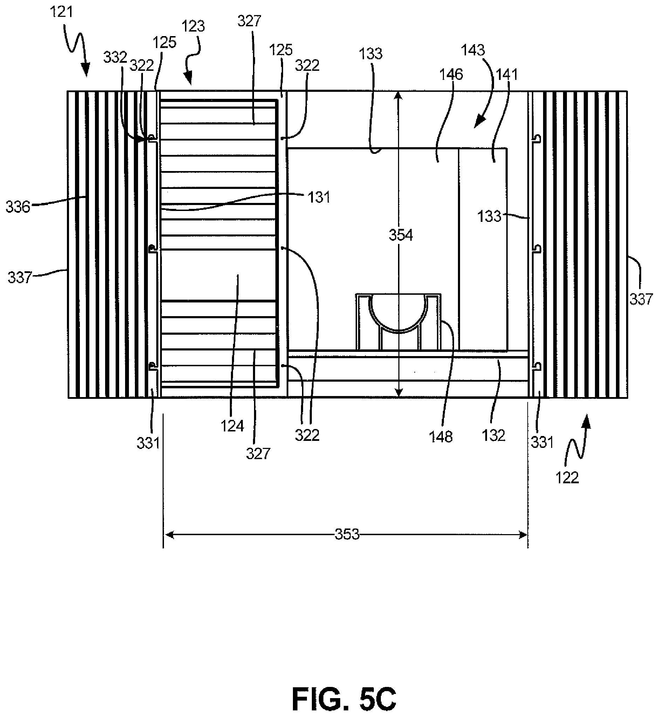

One embodiment of an additive manufacturing system 140 that operates according to the present disclosure is shown in FIGS. 2A and 2B in perspective view, and in FIGS. 5A, 5B, and 5C in front elevation view. FIG. 2A shows the system 140 with its baffle door 130 open to reveal the build chamber 142. The system 140 includes a build chamber 142 having four side walls 131, 132, 133, and 134 having a rectangular configuration (and optionally, also a back wall), an opening 143 generally defined by the side walls 131, 132, 133, and 134, having an opening with first and second opposing edges defined by walls 131 and 133, and a build platen 141 accessible through the opening 143. System 140 further includes a print head 144, and an x-y gantry 145 on which the print head 144 is carried and which moves the print head 144 in substantially an x,y plane.

In this embodiment, the additive manufacturing system 140 includes deformable thermal insulators in the form of a baffle door 120 in lieu of a hinged door comprising first and second baffle sections 121 and 122, and third baffle section 123 in a central baffle frame 125. The baffle sections 121, 122, and 123 function as a single baffle door 120, allowing an operator to access the build platen 141 at the start and end of jobs, including to adhere a build sheet 146 to the build platen 141 (such as by way of example adherence by vacuum force). The separate baffle sections 121, 122, and 123 allow the print head 144 to move along the build platen 141 when the printer 140 is printing a part 148.

An additive manufacturing system build chamber 142 has a build chamber opening 143 and an internal oven (not shown) to heat the build chamber 142. Opening 143 is defined as described herein by walls 131, 132, 133, and 134 Opposing walls 131 and 133 may be referred to as left or right edges. Opposing walls 132 and 134 may be referred to as bottom or top edges. However, indications of top, bottom, left, right, substantially horizontal, and substantially vertical are made with reference to a direction as shown in the Figures, and may be described differently without departing from the scope of the disclosure. In one embodiment, the baffle door 120 comprises three baffle sections 121, 122, and 123. A first baffle section 121 has a first end attached to the build chamber 142 proximate wall 131 and is operable to expand and contract to cover the opening 143 in a first y direction. A second baffle section 122 is removably attached to the build chamber 142 proximate opposing wall 133 and is configured to expand and contract to cover the opening 143 in the y direction. A third baffle section 123 is positioned between the first and the second baffle sections 121 and 122 and has a frame 125 and a tool port 124 configured to receive a print head 144 or other additive manufacturing tool therein and move in the x direction.

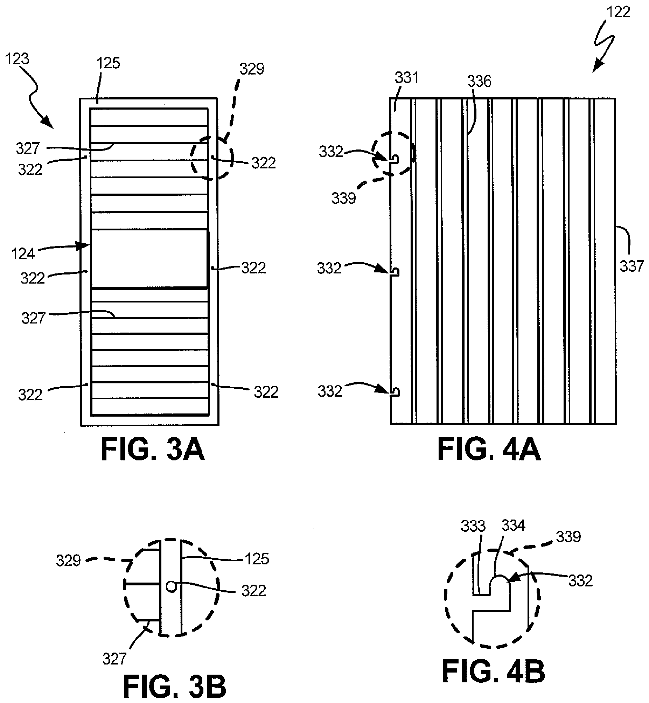

During printing, the baffle door 130 is entirely closed as is shown in FIG. 2B. The print head 144 moves in the x,y plane in one embodiment in conjunction with baffle door 120 (see also FIGS. 3A, 3B, 4A, and 4B) that takes the place of a traditional oven door. In one embodiment, the print head 144 accesses build chamber 142 of the system 140 through the tool port 124 in third baffle door section 123, as is further described below. Print head 144 extends into the build chamber 142 through tool port 124 in third baffle door section 123 to reach the build plane. Initially, the build plane is directly on the build platen 141. As a part 148 is built, the platen 141 is indexed away from the door 120.

An x-y gantry suitable for use with the embodiments of the present disclosure is described in further detail in U.S. Patent No. 7,297,304. It should be understood that any gantry, robotic arm, or other motion control system suitable for moving the print head 144 in the x,y plane is amenable for use with the embodiments of the present disclosure.

In one embodiment, sections 121, 122, and 123 of the baffle door are made out of a high temperature cloth material, such as Teflon™ coated fiberglass. The baffle sections 121, 122, and 123 may be sewn with octagonal cross-sections so as to allow expansion and contraction and to insulate the build chamber 142. Other baffle configurations are known in the art and could be used instead of the coated cloth without departing from the scope of the disclosure. For example, the baffle sections could be welded out of thin stainless steel sheet or the baffle sections could be formed by sliding plates on plates.

FIGS. 3A and 3B show an embodiment of a baffle section 123. In this embodiment, baffle section 123 includes a frame 125 with connectors 322 and baffles 327 of baffle section 123 above and below tool port 124 . Tool port 124 is in one embodiment a predetermined size, such as a size configured to accommodate a print head such as print head 144. The baffle section 123 is extendable to cover a height of the frame 125 above and below the tool port 124. The baffle section123 expands and contracts above and below the tool port 124 as the print head 144 is moved on gantry 145 in the x-y plane. The tool port 124 is therefore movable within the height of the frame 125, as the portions of baffle 123 above and below the tool port 124 expand and contract with the movement. The size of the tool port 124 is configured in one embodiment to retain one or more print heads 144 or other tools (for example, a touch probe such as is disclosed in U.S. Application Serial No. 62/248,994) and may be adjusted for different opening sizes without departing from the scope of the disclosure. In one embodiment, the frame 125 moves laterally in a track or other retention mechanism at a perimeter of the opening 143.

FIG. 3B is a close-up view of section 329 of baffle section 123 as shown in FIG. 3A. The connector 322 in one embodiment is a knob or other protrusion extending from the frame 125. The knob or protrusion 322 is suitable for engagement with a mating notch or connector 332 of a baffle section such as baffle section 121 or 122, described below.

FIGS. 4A and 4B show an embodiment of baffle section 122. It should be understood that baffle section 121 has a similar mirror image configuration, with its connection point and connectors reversed to connect to an opposite side of a baffle section such as baffle section 123. In this embodiment, baffle section 122 comprises a frame 331 with connector slots 332, and baffles 336. The baffles 336 expand and contract as the frame 331 moves left and right. Edge 337 is connected in one embodiment at or near one of the edges 131 or 133 of the build chamber opening 143, and the baffle section 122 expands from and contracts toward the edge 337. Edge 337 in one embodiment may be at the edge 131 or 133 of the build chamber opening 143. In another embodiment, edge 337 is outside the edge 131 or 133 a sufficient distance so that the baffle section 122, when fully contracted toward edge 337, does not obscure any portion of the opening 143.

FIG. 4B is a close-up view of section 339 of baffle section 122 as shown in FIG. 4A. The connector slot 332 comprises in one embodiment a notch 333 and a detent 334 with which the connector 322 of baffle section 123 can engage to secure the baffle section 122 to a baffle section 123.

While a notch 333 and detent 334 of connector 332 are shown connecting to connector 322, it should be understood that different connectors are amenable to use with and are within the scope of the present disclosure. Different releasable connectors will be apparent to those of skill in the art.

FIGS. 5A, 5B, and 5C illustrate the interaction and operation of the baffle sections 121, 122, and 123. FIG. 5A shows baffle sections 121 and 122 flanking central baffle section 123, and removably connected thereto via connectors 322 and 332. Baffle sections 121 and 122 are affixed to the system 140 at one end proximate a wall 131, 133, and are removably attached to the baffle section 123 at their other ends. In one embodiment, the contraction of the baffle sections 121 and 122 toward their respective edges 337 allows substantially the entire width of the opening 143 to be exposed. In yet another embodiment, a single baffle section 121 or 122 is sized to contract sufficiently far so that the entire width of the build chamber opening 143 is exposed. As shown in FIG. 5C, when a baffle door 120 including baffle sections 121, 122, and 123 is used, the baffle sections 121 and 122 contract sufficiently to expose substantially the entire width 353 of the build chamber opening 143. As a print head such as print head 144 is fitted within the tool port 124, and as the print head 144 moves during printing, the baffles 336 of baffle sections 121 and 122 expand and contract with lateral movement along the width 353 of the opening 143, and the baffle portions 327 of baffle section 123 expand and contract in a direction substantially perpendicular to the expansion and contraction of the baffles 336. This expansion and contraction of baffles 327 and 336 allows the tool port 124 to move about the width 353 and height 354 of the build chamber opening 143, while maintaining a configuration in which the opening 143 and therefore the build chamber 142 are thermally insulated by the baffle door 120. FIG. 5B shows a close-up view of section 349 of FIG. 5A. The connectors 322 and 332 are engaged, holding the baffle sections 122 and 123 together.

FIG. 5C shows baffle section 122 disengaged from baffle section 123, and retracted to a lateral edge 133 of the build chamber opening 143, and the central baffle section 123 and other baffle section 121 moved laterally to the other edge 131 of the build chamber opening 143. In this configuration, the baffle section 121 retracts to expose the lateral edge 131, and the baffle section 123 may remain in the opening 143 or be retracted fully from the opening 143. This configuration allows access to the build chamber opening 143, such as for setup or the like.

Baffle sections such as sections 121, 122, and 123 are in one embodiment insulated and foldable, so that extension expands the baffles and retraction contracts the baffles of the baffle sections. In one embodiment, the baffle door 120 is mounted within a frame that includes rails or channels in which the baffle door slides.

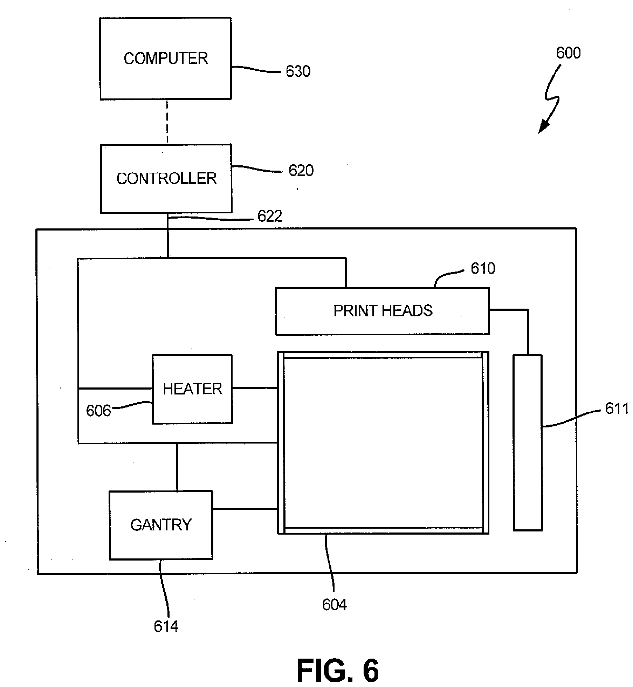

A baffle door 120 with a build chamber 142 and oven may be used in any additive manufacturing system, such as system 600 shown in schematic form in FIG. 6.

FIG. 6 illustrates system 600, which is a first example additive manufacturing system for printing or otherwise building three-dimensional parts using a layer-based, additive manufacturing technique. Suitable systems for system 600 include extrusion-based additive manufacturing systems developed by Stratasys, Inc., Eden Prairie, MN under the trademark "FDM".

As shown in FIG. 6, system 600 includes chamber 604 and print head 610 having an integrated consumable material source such as a hopper filled with consumable material, or coupled to a consumable material source such as a filament canister supply or the like (not shown). Print head 610 may be carried on head gantry 611, which may be a robot or robotic arm. Chamber 604 is an enclosed environment having chamber walls, and initially contains a build surface for printing three-dimensional parts along a vertical axis, or a movable platen 36 for printing three-dimensional parts along a horizontal printing axis.

In the shown embodiment, chamber 604 includes heating mechanism 606, which may be any suitable mechanism configured to heat chamber 604, such as one or more heaters and air circulators to blow heated air throughout chamber 604 or in a build plane. Heating mechanism 606 may heat and maintain chamber 604, at least in the vicinity of print head 610, at one or more temperatures that will slow the rate of solidification of the dispensed layers and reduce curl, for example, in a window between the solidification temperature and the creep relaxation temperature of the part material and/or the support material. This reduces the rate at which the part and support materials solidify after being extruded and deposited (e.g., to reduce distortions and curling), where the creep relaxation temperature of a material is proportional to its glass transition temperature. For printing along a horizontal axis, system 600 includes a gantry 614 along which the platen is indexed during printing of a three-dimensional part. In one such embodiment, the gantry 614 indexes the platen and its associated part horizontally out of the chamber 604 through a port or other opening typically on an opposite side as the chamber door.

In some embodiments, print head 610 may be an auger-based viscosity pump, such as those disclosed in Batchelder et al., U.S. Patent No. 5,312,224 and 5,764,521, and Skubic et al., U.S. Patent No. 7,891,964. In additional embodiments, in which print head 610 is an interchangeable, single-nozzle print head, examples of suitable devices for each print head 610, and the connections between print head 610 and head gantry 611 include those disclosed in Swanson et al., U.S. Patent Application Publication No. 2012/0164256. In other embodiments, print head 610 may be a gear pump liquefier, such as is disclosed in Hjelsand et al., PCT Application Publication No. WO 2016/014543.

System 600 also includes controller 620, which is one or more control circuits configured to monitor and operate the components of system 600. For example, one or more of the control functions performed by controller 620 can be implemented in hardware, software, firmware, and the like, or a combination thereof. Controller 620 may communicate over communication line 622 with chamber 604 (e.g., heating mechanism 606), print head 610, and various sensors, calibration devices, display devices, and/or user input devices.

In some embodiments, controller 620 may also communicate with one or more of any other suitable components of system 600. While illustrated as a single signal line, communication line 622 may include one or more electrical, optical, and/or wireless signal lines, allowing controller 620 to communicate with various components of system 600. Furthermore, while illustrated outside of system 600, controller 620 and communication line 622 are desirably internal components to system 600.

System 600 and/or controller 620 may also communicate with computer 630, which is one or more computer-based systems that communicates with system 600 and/or controller 620 and may be separate from system 600, or alternatively may be an internal component of system 600. Computer 630 includes computer-based hardware, such as data storage devices, processors, memory modules and the like for generating and storing tool path and related printing instructions. Computer 620 may transmit these instructions to system 600 (e.g., to controller 620) to perform printing operations.

During operation, controller 620 may direct print head 610 to selectively draw successive part or support material from a hopper carried on head gantry 611 with print head 610. Print head 610 thermally melts the material such that it becomes molten and flowable. The molten flowable material is then extruded and deposited from print head 610, along the printing axis, onto the build surface or movable platen for printing a three-dimensional part.

Print head 610 in one embodiment is a screw extruder print head which includes a local hopper, which carries a supply of particle-based consumable material, such as is disclosed in U.S. Pat. No. 8,955,558, during operation, controller 620 may direct print head 610 to shear and melt successive amounts of the item and support material provided from the hopper in print head 610. Periodically, the local hopper is refilled with material from consumable supply sources (not shown).

Print head 610 may further include an extruder comprising a motor and a drive mechanism for pressurizing, melting and extruding the consumable material. The drive mechanism includes a screw or impeller that is rotated by the motor. The molten consumable material is driven by drive mechanism as the drive mechanism is rotated by motor through a suitable arrangement (e.g., gears, belts, etc.) based on speed commands sent by the controller 620. The drive mechanism drives the consumable material through the extruder and a nozzle. The molten consumable material is discharged from the nozzle as an extrudate that forms a layer of the 3D part and/or support structure on a platen such as platen 141. One exemplary impeller-driven viscosity pump extruder is disclosed in US Patent No. 7,891,964.

The insulated baffle door of the present disclosure functions as a replacement for a heavy, space-occupying oven door, as well as a portal for the a print head or a user to access the build chamber, the print head moving in a build region across the build platform of an additive manufacturing system. Further, the insulated baffle door reduces heat loss for such access by the print head and/or the user by providing a customizable, adjustable size access opening to the build chamber, such as to place print foundations, build sheets, and the like, and to remove a completed part.

## Claims

1. A build chamber for an additive manufacturing system (140) for printing three-dimensional parts (148), the build chamber comprising:
a chamber (142; 604) having an opening (143) with first (131) and second (133) opposing edges;
a build platen (141) within the chamber (142; 604);
a baffle door (120) expandable across the chamber opening (143) so as to enclose the build platen (141), the baffle door (120) having a first baffle section (121) attached at the first opposing edge (131) and configured to extend between a first position adjacent the first opposing edge (131) and a second position adjacent the second opposing edge (133), a second baffle section (122) attached at the second opposing edge (133) and configured to extend between a first position adjacent the second opposing edge (133) and a second position adjacent the first opposing edge (131), and a third baffle section (123) positioned between the first and second baffle sections and having a frame (125), a tool port (124) for receiving an additive manufacturing tool (144), and a set of baffles (327) on either side of the tool port (124), the baffles (327) configured to expand and contract, in a direction substantially perpendicular to expansion and contraction of the first and the second baffle sections (121, 122), as the tool port (124) moves within the frame (125), **characterized in that** the first and the second baffle sections (121, 122) are independently operable.

2. The build chamber of claim 1, and further comprising a heating mechanism (606) configured to heat a region of the chamber (142; 604) to one or more temperatures.

3. The build chamber of claim 1, wherein the baffle sections (121, 122, 123) are insulated.

4. The build chamber of claim 1, wherein a first side of the third baffle section (123) is removably attachable to the first baffle section (121).

5. The build chamber of claim 4, wherein a second side of the third baffle section (123) opposite to the first side is removably attachable to the second baffle section (122).

6. The build chamber of claim 4, wherein the third baffle section (123) is insulated.

7. The build chamber of claim 1, wherein at least one of the first and the second baffle sections (121, 122) are removably attached to the first or the second opposing edge (133), respectively.

8. The build chamber of claim 1, wherein the first and second baffle door sections (121, 122) are further configured to adjust a first span of the opening (143).

9. A method of providing user access to a build platen (141) contained within a heated build chamber (142; 604) of an additive manufacturing system (140) through an opening (143) with first (131) and second (133) opposing edges, the method comprising:
providing a baffle door (120) through which a print head is received and the build platen (141) is accessed, the baffle door (120) comprising:
a first baffle section (121) including a first end attached to the build chamber (142; 604) at a first edge (131) and operable to expand and contract to cover the opening (143) in a first direction;
a second baffle section (122) including a first end removably attached to the build chamber (142; 604) at a second edge (133) and operable to expand and contract to cover the opening (143) in the first direction; and
a third baffle section (123) positioned between the first and second baffle sections and having a frame (125), a tool port (124) in the frame (125) for receiving the print head, and baffles (327) on either side of the tool port (124), the third baffle section (123) configured to expand and contract in a second direction substantially perpendicular to the first direction as the tool port (124) moves within the frame (125), **characterized in that** the method further comprises independently operating the first and second baffle sections (121,122).

10. The method of claim 9, and further comprising accessing the build platen (141) by detaching the second baffle section (122) from the build chamber (142; 604) and compressing the baffle door (120).

11. The method of claim 9, and further comprising removably attaching the first baffle section (121) to the frame (125) of the third baffle section (123) at a first edge of the frame (125).

12. The method of claim 11, and further comprising removably attaching the second baffle section (122) to the frame (125) of the third baffle section (123) at a second edge of the frame (125) opposite the first edge.

13. The method of claim 9, wherein providing a baffle door (120) comprises provided an insulated baffle door (120).

14. The method of claim 9, and further comprising providing removable attachment mechanisms between the first and third baffle sections (121, 123), and between the second and third baffle sections (121, 123).

## Patentansprüche

1. Baukammer für ein additives Fertigungssystem (140) zum Drucken dreidimensionaler Teile (148), wobei die Baukammer aufweist:
eine Kammer (142; 604) mit einer Öffnung (143), die einen ersten (131) und einen zweiten (133) gegenüberliegenden Rand aufweist;
eine Aufbauplatte (141) innerhalb der Kammer (142; 604);
eine Pralltür (120), die quer über die Kammeröffnung (143) ausdehnbar ist, um die Aufbauplatte (141) zu umschließen, wobei die Pralltür (120) einen ersten Pralltürabschnitt (121), der am ersten gegenüberliegenden Rand (131) befestigt und dafür konfiguriert ist, sich zwischen einer ersten Position in der Nähe des ersten gegenüberliegenden Rands (131) und einer zweiten Position in der Nähe des zweiten gegenüberliegenden Rands (133) zu erstrecken, einen zweiten Pralltürabschnitt (122), der am zweiten gegenüberliegenden Rand (133) befestigt und dafür konfiguriert ist, sich zwischen einer ersten Position in der Nähe des zweiten gegenüberliegenden Rands (133) und einer zweiten Position in der Nähe des ersten gegenüberliegenden Rands (131) zu erstrecken, und einen dritten Pralltürabschnitt (123) aufweist, der zwischen dem ersten und dem zweiten Pralltürabschnitt angeordnet ist und einen Rahmen (125), eine Werkzeugöffnung (124) zum Aufnehmen eines additiven Fertigungswerkzeugs (144) und einen Satz von Prallflächen (327) auf jeder Seite der Werkzeugöffnung (124) aufweist, wobei die Prallflächen (327) dafür konfiguriert sind, sich in einer Richtung auszudehnen und zusammenzuziehen, die sich im Wesentlichen senkrecht zur Ausdehnungs- und Zusammenziehrichtung des ersten und des zweiten Pralltürabschnitts (121, 122) erstreckt, wenn sich die Werkzeugöffnung (124) innerhalb des Rahmens (125) bewegt, **dadurch gekennzeichnet, dass** der erste und der zweite Pralltürabschnitt (121, 122) unabhängig voneinander betreibbar sind.

2. Baukammer nach Anspruch 1, ferner mit einem Heizmechanismus (606), der dafür konfiguriert ist, einen Bereich der Kammer (142; 604) auf eine oder mehrere Temperaturen zu erwärmen.

3. Baukammer nach Anspruch 1, wobei die Pralltürabschnitte (121, 122, 123) isoliert sind.

4. Baukammer nach Anspruch 1, wobei eine erste Seite des dritten Pralltürabschnitts (123) entfernbar am ersten Pralltürabschnitt (121) befestigbar ist.

5. Baukammer nach Anspruch 4, wobei eine zweite Seite des dritten Pralltürabschnitts (123) gegenüber der ersten Seite entfernbar am zweiten Pralltürabschnitt (122) befestigbar ist.

6. Baukammer nach Anspruch 4, wobei der dritte Pralltürabschnitt (123) isoliert ist.

7. Baukammer nach Anspruch 1, wobei mindestens ein Pralltürabschnitt unter dem ersten und dem zweiten Pralltürabschnitt (121, 122) entfernbar am ersten bzw. am zweiten gegenüberliegenden Rand (133) befestigt ist.

8. Baukammer nach Anspruch 1, wobei der erste und der zweite Pralltürabschnitt (121, 122) ferner dafür konfiguriert sind, eine erste Spannweite der Öffnung (143) einzustellen.

9. Verfahren zum Bereitstellen eines Benutzerzugangs zu einer Aufbauplatte (141), die in einer geheizten Baukammer (142; 604) eines additiven Fertigungssystems (140) enthalten ist, über eine Öffnung (143), die einen ersten (131) und einen zweiten (133) gegenüberliegenden Rand aufweist, wobei das Verfahren die Schritte aufweist:
Bereitstellen einer Pralltür (120), über die ein Druckkopf aufgenommen und ein Zugang zur Aufbauplatte (141) ermöglicht wird, wobei die Pralltür (120) aufweist:
einen ersten Pralltürabschnitt (121), der ein erstes Ende aufweist, das an der Baukammer (142; 604) an einem ersten Rand (131) befestigt ist, und dafür betreibbar ist, sich auszudehnen und zusammenzuziehen, um die Öffnung (143) in einer ersten Richtung abzudecken;
einen zweiten Pralltürabschnitt (122), der ein erstes Ende aufweist, das an der Baukammer (142; 604) an einem zweiten Rand (133) entfernbar befestigt ist, und dafür betreibbar ist, sich auszudehnen und zusammenzuziehen, um die Öffnung (143) in der ersten Richtung abzudecken; und
einen dritten Pralltürabschnitt (123), der zwischen dem ersten und dem zweiten Pralltürabschnitt angeordnet ist und einen Rahmen (125), eine Werkzeugöffnung (124) im Rahmen (125) zum Aufnehmen des Druckkopfs und Prallflächen (327) auf jeder Seite der Werkzeugöffnung (124) aufweist, wobei der dritte Pralltürabschnitt (123) dafür konfiguriert ist, sich in einer zweiten Richtung auszudehnen und zusammenzuziehen, die sich im Wesentlichen senkrecht zur ersten Richtung erstreckt, wenn sich die Werkzeugöffnung (124) innerhalb des Rahmens (125) bewegt, **dadurch gekennzeichnet, dass** das Verfahren ferner das unabhängige Betreiben des ersten und des zweiten Pralltürabschnitts (121, 122) aufweist.

10. Verfahren nach Anspruch 9, ferner mit dem Zugreifen auf die Aufbauplatte (141) durch Lösen des zweiten Pralltürabschnitts (122) von der Baukammer (142; 604) und Zusammendrücken der Pralltür (120).

11. Verfahren nach Anspruch 9, ferner mit dem lösbaren Befestigen des ersten Pralltürabschnitts (121) am Rahmen (125) des dritten Pralltürabschnitts (123) an einem ersten Rand des Rahmens (125).

12. Verfahren nach Anspruch 11, ferner mit dem lösbaren Befestigen des zweiten Pralltürabschnitts (122) am Rahmen (125) des dritten Pralltürabschnitts (123) an einem zweiten Rand des Rahmens (125) gegenüber dem ersten Rand.

13. Verfahren nach Anspruch 9, wobei das Bereitstellen einer Pralltür (120) das Bereitstellen einer isolierten Pralltür (120) aufweist.

14. Verfahren nach Anspruch 9, ferner mit dem Bereitstellen lösbarer Befestigungsmechanismen zwischen dem ersten und dem dritten Pralltürabschnitt (121, 123) und zwischen dem zweiten und dem dritten Pralltürabschnitt (121, 123).

## Revendications

1. Chambre de construction pour un système de fabrication additive (140) pour l'impression de pièces tridimensionnelles (148), la chambre de construction comprenant:
une chambre (142 ; 604) pourvue d'une ouverture (143) avec des premier (131) et second (133) bords opposés ;
un plateau de construction (141) à l'intérieur de la chambre (142 ; 604) ;
une porte déflectrice (120) pouvant s'étendre à travers l'ouverture de chambre (143) de façon à enfermer le plateau de construction (141), la porte déflectrice (120) présentant une première section déflectrice (121) fixée au niveau du premier bord opposé (131) et conçue pour s'étendre entre une première position adjacente au premier bord opposé (131) et une seconde position adjacente au second bord opposé (133), une deuxième section déflectrice (122) fixée au niveau du second bord opposé (133) et conçue pour s'étendre entre une première position adjacente au second bord opposé (133) et une seconde position adjacente au premier bord opposé (131), et une troisième section déflectrice (123) positionnée entre les première et deuxième sections déflectrices et présentant un cadre (125), un orifice d'outil (124) destiné à recevoir un outil de fabrication additive (144), et un ensemble de déflecteurs (327) de chaque côté de l'orifice d'outil (124), les déflecteurs (327) étant conçus pour s'élargir et se contracter, dans une direction sensiblement perpendiculaire à l'élargissement et la contraction des première et deuxième sections déflectrices (121, 122), lorsque l'orifice d'outil (124) se déplace à l'intérieur du cadre (125), **caractérisée en ce que** les première et deuxième sections déflectrices (121, 122) peuvent fonctionner indépendamment.

2. Chambre de construction selon la revendication 1, et comprenant en outre un mécanisme de chauffage (606) conçu pour chauffer une région de la chambre (142 ; 604) à une ou plusieurs températures.

3. Chambre de construction selon la revendication 1, dans laquelle les sections déflectrices (121, 122, 123) sont isolées.

4. Chambre de construction selon la revendication 1, dans laquelle un premier côté de la troisième section déflectrice (123) peut être fixé de manière amovible à la première section déflectrice (121).

5. Chambre de construction selon la revendication 4, dans laquelle un second côté de la troisième section déflectrice (123) opposé au premier côté peut être fixé de manière amovible à la deuxième section déflectrice (122).

6. Chambre de construction selon la revendication 4, dans laquelle la troisième section déflectrice (123) est isolée.

7. Chambre de construction selon la revendication 1, dans laquelle au moins l'une des première et deuxième sections déflectrices (121, 122) sont fixées respectivement de manière amovible au premier ou au second bord opposé (133).

8. Chambre de construction selon la revendication 1, dans laquelle les première et deuxième sections de porte déflectrices (121, 122) sont conçues en outre pour ajuster un premier écartement de l'ouverture (143).

9. Procédé de fourniture d'accès d'utilisateur à un plateau de construction (141) contenu à l'intérieur d'une chambre de construction chauffée (142 ; 604) d'un système de fabrication additive (140) à travers une ouverture (143) avec des premier (131) et second (133) bords opposés, le procédé comprenant :
la fourniture d'une porte déflectrice (120) à travers laquelle une tête d'impression est reçue et le plateau de construction (141) est accessible, la porte déflectrice (120) comprenant :
une première section déflectrice (121) incluant une première extrémité fixée à la chambre de construction (142 ; 604) au niveau d'un premier bord (131) et étant adaptée à s'élargir et se contracter pour recouvrir l'ouverture (143) dans une première direction ;
une deuxième section déflectrice (122) incluant une première extrémité fixée de manière amovible à la chambre de construction (142 ; 604) au niveau d'un second bord (133) et étant adaptée pour s'élargir et se contracter pour recouvrir l'ouverture (143) dans la première direction ; et
une troisième section déflectrice (123) positionnée entre les première et deuxième sections déflectrices ayant un cadre (125), un orifice d'outil (124) dans le cadre (125) destiné à recevoir la tête d'impression, et des déflecteurs (327) de chaque côté de l'orifice d'outil (124), la troisième section déflectrice (123) étant conçue pour s'élargir et se contracter dans une seconde direction sensiblement perpendiculaire à la première direction lorsque l'orifice d'outil (124) se déplace à l'intérieur du cadre (125), **caractérisé en ce que** le procédé comprend en outre le fonctionnement indépendant des première et deuxième sections déflectrices (121, 122).

10. Procédé selon la revendication 9, et comprenant en outre l'accès au plateau de construction (141) en détachant la deuxième section déflectrice (122) de la chambre de construction (142 ; 604) et en comprimant la porte déflectrice (120).

11. Procédé selon la revendication 9, et comprenant en outre la fixation amovible de la première section déflectrice (121) au cadre (125) de la troisième section déflectrice (123) au niveau d'un premier bord du cadre (125).

12. Procédé selon la revendication 11, et comprenant en outre la fixation amovible de la deuxième section déflectrice (122) au cadre (125) de la troisième section déflectrice (123) au niveau d'un second bord du cadre (125) opposé au premier bord.

13. Procédé selon la revendication 9, dans lequel la fourniture d'une porte déflectrice (120) consiste à fournir une porte déflectrice (120) isolée.

14. Procédé selon la revendication 9, et comprenant en outre la fourniture de mécanismes de fixation amovibles entre les première et troisième sections déflectrices (121, 123), et entre les deuxième et troisième sections déflectrices (121, 123).
